# EUROPEAN PATENT SPECIFICATION

(11) **EP 1 322 502 B1**
(45) Date of publication and mention of the grant of the patent: **22.06.2005**
(21) Application number: 01972848.4
(22) Date of filing: 01.10.2001
(51) Int. Cl.: B60R 21/16

(54) **A STRAP CONNECTION AND A METHOD OF CONNECTING A STRAP**
BANDVERBINDUNG UND VERFAHREN ZUR VERBINDUNG EINES BANDS
ENSEMBLE DE RACCORDEMENT A COURROIE ET PROCEDE DE RACCORDEMENT D'UNE COURROIE

(30) Priority: 03.10.2000 GB 0024171
(43) Date of publication of application: 02.07.2003
(73) Proprietor: AUTOLIV DEVELOPMENT AB, 447 83 Vargarda (SE)
(72) Inventor: DELIGNY, Yann, F-60200 Compiegne (FR); SATZGER, Guido, 81247 München (DE); ORAL, Ridvan, 84048 Mainburg (DE)
(74) Representative: Frankland, Nigel Howard
(86) International application number: PCT/SE2001/002108
(87) International publication number: WO 2002/028691

(56) References cited:
- EP-A1- 0 978 421
- EP-A2- 0 058 129
- DE-U1- 20 014 568
- US-A- 5 570 905
- US-A- 5 653 461

## Description

**THE PRESENT INVENTION** relates to a strap connection and, more particularly, relates to a strap connection between an end part of a strap and part of a motor vehicle.

It is often necessary to connect an end part of a strap to part of the body of a motor vehicle. One example of where a strap connection of this type is required is with an inflatable element in the form of an inflatable side curtain such as that shown in GB-A-2,297,950.

It has been proposed previously to mount straps on a motor vehicle using mounting plates, bolts or hooks. The present invention seeks to provide an improved strap connection.

EP 0,058,129 which comprises the features of the preamble of claims 1 and 11 discloses a connection arrangement for retaining the end of a seat belt strap in an aperture formed through part of a motor vehicle. An end portion of the seat belt strap is folded once along the longitudinal axis of the strap to form an end region in which there are two adjacent layers. The end region of the strap is passed from a front side of the aperture, through the aperture and round a bar extending cross the rear side of the aperture, and then back through the aperture to the front side. Part of the bar pierces the end region of the strap at the fold of the two adjacent layers, thus preventing the strap from being withdrawn through the aperture.

According to this invention there is provided a strap connection comprising a strap and an aperture formed in part of a motor vehicle, the strap comprising a substantially flat strap having a terminal part folded over at least once to create an end region comprising at least two adjacent layers of strap, the aperture being configured and dimensioned to permit the end region of the strap to be inserted through the aperture and to accommodate and retain the flat strap, wherein said adjacent layers are permanently fixed together only over a part of the region in which they are adjacent to define a free tab adjacent the main part of the strap so that when the end region of the strap is inserted through the aperture and a force is applied to the strap tending to withdraw the strap from the aperture the free tab of the strap will engage part of the vehicle adjacent the periphery of the aperture to prevent the end region passing through the aperture.

Preferably the end of the strap is folded over twice to create said end part, the end part thus having three layers of strap.

Conveniently the adjacent layers of strap are permanently fixed together by stitching. Alternatively the adjacent layers may be welded or adhered together.

Preferably the aperture has a first region dimensioned to permit the end region of the strap to be inserted therethrough and a second region, which is connected to the first region, which is dimensioned to accommodate and retain the main body of the flat strap.

Conveniently the first region and the second region are interconnected by a zone having a width less than the width of the strap.

Advantageously a cover is provided adapted to cover the part of the aperture not occupied by the strap when the strap is in the second region. The cover may be a snap-in cover adapted to be snapped into the part of the aperture not occupied by the strap. The cover may completely cover this part of the aperture, or may partially cover this part of the aperture.

Preferably the end of the strap is folded over twice to create the end region, the end region thus having three layers strap.

In an alternative embodiment the aperture is a substantially rectangular aperture having a predetermined width and a predetermined height, the width being slightly greater than the width of the flat strap.

Conveniently the height of the aperture is greater than the thickness of the end region where said layers of said strap are fixed together, the end region having a part where the layers are not fixed together, that part having an initial thickness greater than the height of the aperture, but being resiliently compressible.

Preferably the strap is connected to an inflatable element in the form of an inflatable side curtain.

Conveniently the aperture is formed in the A-pillar of the car body.

The invention also relates to a method of connecting a substantially flat strap to an aperture formed in part of a motor vehicle, the method comprising the steps of folding a terminal part of the strap over at least once to create an end region comprising at least two adjacent layers of strap and inserting the end region through the aperture, permanently fixing the adjacent layers of strap together only over a part of the region in which they are adjacent to define in another part of the region a free tab adjacent the main strap, and positioning the strap so that when a force is applied to the strap tending to withdraw the strap from the aperture the free tab of the strap will engage part of the vehicle adjacent the periphery of the aperture to prevent the end region passing through the aperture.

Conveniently the adjacent layers of strap are permanently fixed together by stitching.

In one embodiment the aperture is provided with a first region dimensioned to permit the end region of the strap to be inserted therethrough and a second region to accommodate and retain the flat strap, the method comprising the steps of inserting the end region of the strap through the first region of the aperture and manipulating the flat strap so that it is located in the second region of the aperture.

In another embodiment the aperture is a rectangular aperture having a width slightly greater than the width of the strap and having a height slightly greater than the thickness of the end region where the said adjacent layers of strap are permanently fixed together, the method comprising the step of inserting the end regions through the aperture, compressing part of the end region where the adjacent layers of strap are not permanently fixed together so that it will pass through the aperture and permitting the compressed region to re-expand.

In order that the invention may be more readily understood, and so that further features thereof may be appreciated, the invention will now be described, by way of example, with reference to the accompanying drawings in which:
FIGURE 1 is a perspective view illustrating part of a motor vehicle, and an end portion of a strap in a first relative position,
FIGURE 2 is a view corresponding to Figure 1 illustrating the end portion of the strap being inserted through an aperture,
FIGURE 3 is a sectional view through the aperture showing a final condition of the strap,
FIGURE 4 is a diagrammatic view of an alternate form of aperture.
FIGURE 5 is a view corresponding to Figure 3 showing a further embodiment of the invention, and
FIGURE 6 is a front view of the aperture of Figure 5.

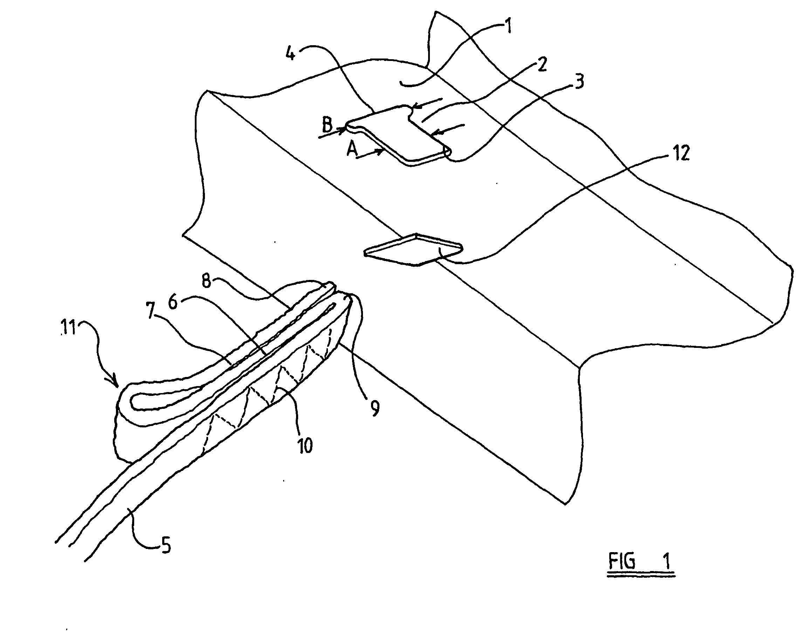

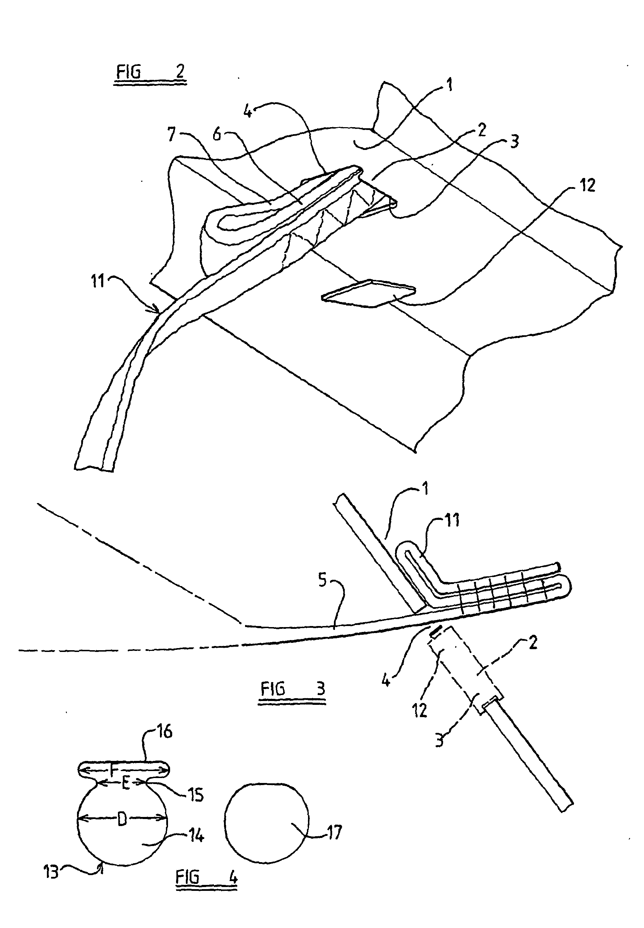

Referring initially to Figure 1 of the accompanying drawings, an A-Post of a motor vehicle is illustrated. An aperture 2 is formed in the A-Post of a motor vehicle. The aperture includes a first region 3 shown to be of generally rectangular form having a predetermined width "A", which may be 9mm. One end of the rectangular region 3 is enlarged, to form the terminal region 4 which has an enlarged width "B", which may be 11-12mm.

A strap 5 is illustrated in the form of a webbing strap. The webbing strap has a predetermined width, for example 10mm and a predetermined thickness, which may be about 1.6mm. The terminal region of the strap 6 has been folded back to lie adjacent the main body part of the strap, and the end part 7 of the terminal region has been folded back to lie adjacent the rest of the terminal region. Thus, the end region of the strap comprises three thicknesses of strap, with the very end 8 of the strap substantially aligned with a bend 9 between the main body of the strap and the folded back terminal region 6 of the strap.

A substantial portion of this region where three thicknesses of strap is provided is stitched together by means of stitching 10. The thickness of the stitched region is about 5mm. However, the stitching 10 does not cover the whole of the region, and thus a certain length of the super-imposed terminal region 6 and the end part 7 thereof forms a tab 11 which lies adjacent the main strap, but is not stitched thereto. In the region where the three superimposed thicknesses of strap are not stitched together, due to the natural resilience of the material forming the strap, the three adjacent layers tend to separate from each other, and the thickness of this region may be of the order of 8mm. However, this region may be resiliently compressed to have a lesser thickness if pressure is applied to the strap when compressing pressure is removed the region returns to its initial form.

It is to be understood that the width "A" of the aperture 3 has been selected so that the illustrated end part of the strap 5 may be inserted into the aperture 2 in one orientation with the width of the strap being transverse to the width of the aperture. Also the width "B" has been selected to be slightly greater than the width of the main body of the strap 5. The width "A" has been selected to be less than the width of the main body of the strap 5. The terminal region 4 of the aperture 2 has a section which is slightly larger than the cross-section of the main body of the strap 5.

A snap-in cover 12 is provided, dimensioned to be snap-fitted into the main region 3 of the aperture 2.

The strap 5 may be connected to part of an air-bag or inflatable element, part of which is shown in phantom. The inflatable element is preferably an inflatable element that can form a side curtain in a motor vehicle. GB-A-2,297,950 provides a description of examples of inflatable elements that can form side curtains.

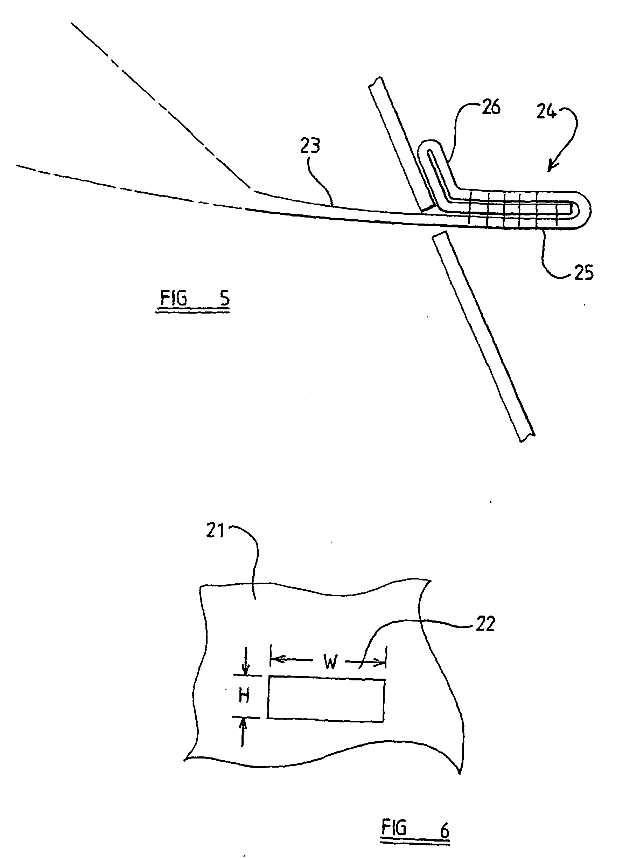

Referring to Figure 2, it can be seen that the end part of the strap 5 is being inserted into the aperture 2. When the entire end region of the strap that has three thicknesses has been inserted into the aperture, the main body of the straps may be manipulated so as to lie solely within the terminal region 4 of the aperture 2. The region 4 is dimensioned to accommodate simply the single thickness of strapping that forms the main body of the strap 5. If there is any tendency to withdraw the strap 5 from the aperture 2, the tab 11 will engage the part of the A-Post adjacent the periphery of the aperture 2, as shown in Figure 3, thus preventing the end of the strap from being withdrawn from the aperture 2. Thus the strap 5 may extend tightly from the A-Post 1 to an inflatable element, such as the inflatable element shown in phantom in Figure 3. The strap 5 will not tend to pass into the rectangular region 3 of the aperture, since the part of that region 3 adjacent the terminal region 4 has a width less than the width of the strap 5.

When the strap 5 is in position, the snap-in cover may be snapped in position which will ensure that the strap stays in place within the terminal region 4. The cover 12 is shown in position in phantom in Figure 3.

Whilst the invention has been described with reference to an embodiment in which a particular shape of aperture has been provided, Figure 4 illustrates an alternative aperture 13. The aperture 13 has a first region 14 of generally circular form having a diameter D sufficient to enable the end of a strap, such as the strap 5 shown in Figure 1, to be inserted into the aperture. The region 14 is separated by a relatively narrow neck 15, having a width E, from a further region 16 having a width F. The width F of the region 16 is selected to be greater than the width of the single webbing that forms the main part of the strap 5, and the region 14 thus corresponds with the region 4 of the aperture 2 being dimensioned to snugly receive one thickness of the strap that forms the main body of the strap 5. The width E is less than the width of the strap. A snap-in cover 17 may be provided to be snapped into the region 14.

It is to be appreciated that in use of the embodiment illustrated in Figure 4 the end region of the strap will be inserted through the circular first region 14 of the aperture 13. When the end region has been passed completely through the aperture the single webbing that forms the main part of the strap that is then passing through the aperture 13 will be manipulated so that it lies solely within the further region 16. The snap-in cover may then be located in position within the circular region 14, thus serving to retain the single webbing forming the main body of the strap 5 within the further region 16. Any tension applied to the main body of the strap by tending to withdraw the strap from the aperture will cause the tab 11 to engage part of the A-post adjacent the periphery of the aperture 13 in a manner similar to that illustrated in Figure 3.

Figures 5 and 6 illustrate an alternative embodiment of the invention in which the A-post 21 of the vehicle is provided with an aperture 22. In this embodiment the aperture 22 is a rectangular aperture having a height H of 7mm and a width W of 11-12mm. A strap 23 is provided which is similar to the strap 5 of the embodiment described with reference to Figures 1 to 3. The strap 23 has an end region 24 in which the very end part of the strap is folded back upon itself and is then folded back again to form a terminal region where three layers of strap are superimposed. The end part 25 of the terminal region is provided with stitching where the three superimposed layers of strap are stitched together. Extending from the end part 25 is an unstitched tab 26 formed by two of the folded back layers. The tab 26 may move to a position in which it is slightly separated from the main part of the strap 23. The strap 23 may have a width of 10mm. The stitched part 25 of the terminal region 24 may have a thickness of 5mm, and the thickness of the tab 26 and the adjacent part of the strap 23 may be approximately 8mm, due to the natural resilience of the webbing forming the strap.

The terminal region 24 may be introduced into the aperture 6. The width of the terminal region 24 is less than the width of the aperture 22 and the thickness of the stitched part 25 of the terminal region 24 is less than the height of the aperture 22. Thus the terminal part of the end region 24 may be easily introduced into the aperture 22. As the terminal region 24 continues to be inserted into the aperture 22, the aperture 22 will serve to compress slightly the combination of the tab 26 and the adjacent part of the main body of the strap 23. Thus the entire end region 24 may be inserted through the aperture 22. If, subsequently, a force is applied to the main part 23 of the strap tending to withdraw the end region 24 back through the aperture 22, because the tab 26 will have re-eapanded to its initial condition, the tab will engage part of the A-post 21 of the vehicle adjacent the periphery of the aperture 22 thus preventing the end region 24 from passing back out through the aperture. As in the previously described embodiments the strap 23 may be connected to part of an inflatable element, as shown in phantom in Figure 5.

In the present specification "comprise" means "includes or consists of" and "comprising" means "including or consisting of".

## Claims

1. A strap connection comprising a strap (5, 23) and an aperture (2, 13, 22) formed in part of a motor vehicle, the strap (5, 23) comprising a substantially flat strap having a terminal part folded over at least once (6, 7) to create an end region comprising at least two adjacent layers of strap, the aperture (2, 13, 22) being configured and dimensioned to permit the end region of the strap (5, 23) to be inserted through the aperture (2, 13, 22) and to accommodate and retain the flat strap (5, 23), the strap connection being **characterised in that**: the said adjacent layers are permanently fixed together only over a part of the region in which they are adjacent to define a free tab (11, 26) adjacent the main part of the strap (5, 23), so that when the end region of the strap is inserted through the aperture and a force is applied to the strap tending to withdraw the strap from the aperture the free tab of the strap will engage part of the vehicle adjacent the periphery of the aperture to prevent the end region passing through the aperture.

2. A connection according to Claim 1 wherein the strap is folded over twice to create said end part, the end part thus having three layers of strap.

3. A connection according to Claim 1 or 2 wherein the adjacent layers of strap are permanently fixed together by stitching.

4. A connection according to any one of the preceding Claims wherein the aperture (2, 15) has a first region (3, 14) dimensioned to permit the end region of the strap (5) to be inserted therethrough and a second region (4, 16), which is connected to the first region (3, 14), which is dimensioned to accommodate and retain the main body of the flat strap (5).

5. A connection according to Claim 4 wherein said first region (14) and the second region (16) are interconnected by a zone (15) having a width less than the width of the strap (5).

6. A connection according to Claim 4 or 5 wherein a cover (12, 17) is provided adapted to cover the part of the aperture (2, 13) not occupied by the strap (15) when the strap is in the second region (4, 6).

7. A connection according to any one of Claims 1 to 3 wherein the aperture (22) is a substantially rectangular aperture having a predetermined width and predetermined height, the width being slightly greater than the width of the flat strap (23).

8. A connection according to Claim 7 wherein the height of the aperture (22) is greater than the thickness of the end region (24) where said layers of said strap are fixed together, the end region (24) having a part (26) where the layers are not fixed together, that part (26) having an initial thickness greater than the height of the aperture, but being resiliently compressible.

9. A connection according to any one of the preceding Claims wherein the strap (5, 23) is connected to an inflatable element in the form of an inflatable side curtain.

10. A connection according to Claim 8 wherein the aperture is formed in the A-Pillar of the car body.

11. A method of connecting a substantially flat strap (5, 23) to an aperture (2, 13, 22) formed in part of a motor vehicle, the method comprising the steps of folding a terminal part of the strap over at least once (6, 7) to create an end region comprising at least two adjacent layers of strap and inserting the end region through the aperture (2, 13, 22), the method being **characterised by**: permanently fixing the adjacent layers of strap together only over a part of the region in which they are adjacent to define in another part of the region a free tab (11, 26) adjacent the main strap (5, 22), and positioning the strap (5, 23) so that when a force is applied to the strap (5, 23) tending to withdraw the strap from the aperture the free tab (11, 26) of the strap will engage part of the vehicle adjacent the periphery of the aperture (2, 13, 22) to prevent the end region passing through the aperture.

12. A method according to Claim 11 wherein the end of the strap is folded over twice to create the end region, the end region thus having three layers of strap.

13. A method according to Claim 11 or 12 wherein the adjacent layers of strap are permanently fixed together by stitching (10).

14. A method according to any one of Claims 11 to 13 wherein the aperture (2, 13) is provided with a first region (3, 14) dimensioned to permit the end region of the strap (5) to be inserted therethrough and a second region (4, 16) to accommodate and retain the flat strap, the method comprising the steps of inserting the end region of the strap (5) through the first region (3, 14) of the aperture (2, 13) and manipulating the flat strap so that it is located in the second region (4, 16) of the aperture.

15. A method according to any one of Claims 11 to 14 wherein the aperture (22) is a rectangular aperture having a width slightly greater than the width of the strap and having a height slightly greater than the thickness of the end region where the said adjacent layers of strap (23) are permanently fixed together, the method comprising the step of inserting the end region through the aperture, compressing part of the end region where the adjacent layers of strap are not permanently fixed together so that it will pass through the aperture (22) and permitting the compressed region to re-expand.

## Patentansprüche

1. Gurtanschluß mit einem Gurt (5, 23) und einer Öffnung (2, 13, 22), die in einem Teil eines Motorfahrzeugs ausgebildet ist, wobei der Gurt (5, 23) aus einem im wesentlichen ebenen Gurt besteht, der einen Endabschnitt aufweist, der zumindest einmal (6, 7) übereinander gefaltet ist, um einen Endbereich zu erzeugen, der zumindest zwei benachbarte Lagen des Gurts aufweist, wobei die Öffnung (2, 13, 22) so konfiguriert und dimensioniert ist, um zu ermöglichen, daß der Endbereich des Gurts (5, 23) durch die Öffnung (2, 13, 22) eingesteckt werden kann, und um den ebenen Gurt (5, 23) aufzunehmen und festzuhalten, wobei der Gurtanschluß **dadurch gekennzeichnet ist, daß** die genannten benachbarten Lagen lediglich über einen Teil des Bereichs, in dem sie benachbart zueinander liegen, permanent aneinander fixiert sind, so daß eine freie Lasche (11, 26) gebildet wird, benachbart zu dem Hauptteil des Gurts (5, 23), so daß dann, wenn der Endbereich des Gurts durch die Öffnung gesteckt ist und eine Kraft auf den Gurt aufgebracht wird, die dazu neigt, den Gurt aus der Öffnung herauszuziehen, die freie Lasche des Gurts mit einem Teil des Fahrzeugs zusammenwirkt, der sich benachbart zu dem Umfang der Öffnung befindet, um zu verhindern, daß der Endbereich durch die Öffnung hindurchgeht.

2. Anschluß nach Anspruch 1, **dadurch gekennzeichnet, daß** der Gurt zweifach übereinander gefaltet ist, um den genannten Endabschnitt zu bilden, wobei der Endabschnitt auf diese Weise drei Lagen des Gurts aufweist.

3. Anschluß nach Anspruch 1 oder 2, **dadurch gekennzeichnet, daß** die benachbarten Lagen des Gurts durch Nähen permanent aneinander fixiert sind.

4. Anschluß nach einem der vorangehenden Ansprüche, **dadurch gekennzeichnet, daß** die Öffnung (2, 15) einen ersten Bereich (3, 14) aufweist, der so dimensioniert ist, um zu ermöglichen, daß der Endbereich des Gurts (5) durch diesen hindurchgesteckt werden kann, und einen zweiten Bereich (4, 16), der mit dem ersten Bereich (3, 14) verbunden ist und der so dimensioniert ist, daß er den Hauptteil des ebenen Gurts (5) aufnimmt und hält.

5. Anschluß nach Anspruch 4, **dadurch gekennzeichnet, daß** der erste Bereich (14) und der zweite Bereich (16) durch eine Zone (15) miteinander verbunden sind, die eine Breite aufweist, die geringer ist als die Breite des Gurts (5).

6. Anschluß nach Anspruch 4 oder 5, **dadurch gekennzeichnet, daß** eine Abdeckung (12, 17) vorgesehen ist, die dazu bestimmt ist, den Teil der Öffnung (2, 13) abzudecken, der nicht durch den Gurt (15) eingenommen wird, wenn sich der Gurt in dem zweiten Bereich (4, 6) befindet.

7. Anschluß nach einem der Ansprüche 1 bis 3, **dadurch gekennzeichnet, daß** die Öffnung (22) eine im wesentlichen rechteckige Öffnung ist, die eine vorbestimmte Breite und eine vorbestimmte Höhe aufweist, wobei die Breite geringfügig größer ist als die Breite des ebenen Gurts (23).

8. Anschluß nach Anspruch 7, **dadurch gekennzeichnet, daß** die Höhe der Öffnung (22) größer ist als die Höhe des Endbereichs (24), an dem die genannten Lagen des Gurts aneinander befestigt sind, wobei der Endbereich (24) einen Teil (26) aufweist, an dem die Lagen nicht aneinander befestigt sind, und wobei dieser Teil (26) eine anfängliche Dicke aufweist, die größer ist als die Höhe der Öffnung, allerdings nachgiebig zusammendrückbar ist.

9. Anschluß nach einem der vorangehenden Ansprüche, **dadurch gekennzeichnet, daß** der Gurt (5, 23) mit einem aufblasbaren Element in der Form eines aufblasbaren seitlichen Vorhangs verbunden ist.

10. Anschluß nach Anspruch 8, **dadurch gekennzeichnet, daß** die Öffnung in der A-Säule der Fahrzeugkarosserie ausgebildet ist.

11. Verfahren zum Anschließen eines im wesentlichen ebenen Gurts (5, 23) an eine Öffnung (2, 13, 22), die in einem Teil eines Motorfahrzeugs ausgebildet ist, wobei das Verfahren die Schritte umfaßt, einen Endabschnitt des Gurts zumindest einmal (6, 7) übereinander zu falten, um einen Endbereich zu bilden, der zumindest zwei benachbarte Lagen des Gurts aufweist, und den Endbereich durch die Öffnung (2, 13, 22) zu stecken, wobei das Verfahren **dadurch gekennzeichnet ist, daß** die benachbarten Lagen des Gurts lediglich über einen Teil des Bereichs, in dem sie benachbart zueinander sind, permanent aneinander fixiert werden, um in einem anderen Teil des Bereichs eine freie Lasche (11, 26) zu bilden, benachbart zu dem Hauptteil des Gurts (5, 22), und daß der Gurt (5, 23) so positioniert wird, daß dann, wenn eine Kraft auf den Gurt (5, 23) aufgebracht wird, die dazu neigt, den Gurt aus der Öffnung herauszuziehen, die freie Lasche (11, 26) des Gurts mit einem Teil des Fahrzeugs benachbart zu dem Umfang der Öffnung (2, 13, 22) zusammenwirkt, um zu verhindern, daß der Endbereich durch die Öffnung hindurchgeht.

12. Verfahren nach Anspruch 11, **dadurch gekennzeichnet, daß** das Ende des Gurts zweifach umgefaltet ist, um den Endbereich zu erzeugen, wobei der Endbereich auf diese Weise drei Lagen des Gurt aufweist.

13. Verfahren nach Anspruch 11 oder 12, **dadurch gekennzeichnet, daß** die benachbarten Lagen des Gurts durch Nähen (10) permanent aneinander fixiert sind.

14. Verfahren nach einem der Ansprüche 11 bis 13, **dadurch gekennzeichnet, daß** die Öffnung (2, 13) mit einem ersten Bereich (3, 14) versehen ist, der so dimensioniert ist, um zu ermöglichen, daß der Endbereich des Gurts (5) durch diesen hindurchgesteckt wird, und mit einem zweiten Bereich (4, 16), um den ebenen Gurt aufzunehmen und zu halten, wobei das Verfahren die Schritte umfaßt, den Endbereich des Gurts (5) durch den ersten Bereich (3, 14) der Öffnung (2, 13) zu stecken, und den ebenen Gurt so zu betätigen, daß er sich in dem zweiten Bereich (4, 16) der Öffnung befindet.

15. Verfahren nach einem der Ansprüche 11 bis 14, **dadurch gekennzeichnet, daß** die Öffnung (22) eine rechteckige Öffnung ist, die eine Breite aufweist, die geringfügig größer als die Breite des Gurts ist, und die eine Höhe aufweist, die geringfügig größer als die Dicke des Endbereichs ist, an dem die genannten benachbarten Lagen des Gurts (23) permanent aneinander fixiert sind, wobei das Verfahren den Schritt umfaßt, den Endbereich durch die Öffnung zu stecken, wobei ein Teil des Endbereichs zusammengedrückt wird, dort wo die benachbarten Lagen des Gurts nicht permanent aneinander fixiert sind, so daß er durch die Öffnung (22) hindurchgeht, und den Schritt, daß man dem zusammengedrückten Bereich ermöglicht, erneut zu expandieren.

## Revendications

1. Dispositif de raccordement à sangle comprenant une sangle (5, 23) et une ouverture (2, 13, 22) formée dans une partie d'un véhicule à moteur, la sangle (5, 23) comprenant une sangle sensiblement plane ayant une partie terminale repliée au moins une fois (6, 7) pour créer une région terminale comprenant au moins deux couches de sangle adjacentes, l'ouverture (2, 13, 22) étant d'une configuration et de dimensions propres à permettre à la région terminale de la sangle (5, 23) d'être introduite à travers l'ouverture (2, 13, 22) et pour recevoir et retenir la sangle plane (5, 23), le dispositif de raccordement à sangle étant **caractérisé en ce que** lesdites couches adjacentes sont fixées de façon permanente l'une à l'autre uniquement sur une partie de la région dans laquelle elles sont adjacentes pour définir une languette libre (11, 26) adjacente à la partie principale de la sangle (5, 23), de sorte que lorsque la région terminale de la sangle est introduite à travers l'ouverture et qu'une force est appliquée à la sangle, qui tend à faire sortir la sangle hors de l'ouverture, la languette libre de la sangle va engager la partie du véhicule adjacente à la périphérie de l'ouverture pour empêcher que la région terminale ne passe à travers l'ouverture.

2. Dispositif de raccordement selon la revendication 1, dans lequel la semble est repliée deux fois pour créer ladite partie terminale, la partie terminale ayant donc trois couches de sangle.

3. Dispositif de raccordement selon l'une ou l'autre des revendications 1 et 2, dans lequel les couches adjacentes de sangle sont fixées ensemble de façon permanente par couture.

4. Dispositif de raccordement selon l'une quelconque des revendications précédentes, dans lequel l'ouverture (2, 15) a une première région (3, 14) dimensionnée de façon à permettre à la région terminale de la sangle (5) d'être introduite à travers celle-ci, et une seconde région (4, 16), connectée à la première région (3, 14), qui est dimensionnée de façon à loger et à retenir le corps principal de la sangle plane (5).

5. Dispositif de raccordement selon la revendication 4, dans lequel ladite première région (14) et la seconde région (16) sont interconnectées par une zone (15) ayant une largeur inférieure à la largeur de la sangle (5).

6. Dispositif de raccordement selon l'une ou l'autre des revendications 4 et 5, dans lequel un couvercle (12, 17) est prévu, adapté pour couvrir la partie de l'ouverture (2, 13) qui n'est pas occupée par la sangle (15) quand la sangle est dans la seconde région (4, 6).

7. Dispositif de raccordement selon l'une quelconque des revendications 1 à 3, dans lequel l'ouverture (22) est une ouverture sensiblement rectangulaire avec une largeur prédéterminée et une hauteur prédéterminée, la largeur étant légèrement supérieure à la largeur de la sangle plane (23).

8. Dispositif de raccordement selon la revendication 7, dans lequel la hauteur de l'ouverture (22) est supérieure à l'épaisseur de la région terminale (24) dans laquelle lesdites couches de ladite sangle sont fixées ensemble, la région terminale (24) ayant une partie (26) dans laquelle les couches ne sont pas fixées ensemble, ladite partie (26) ayant une épaisseur initiale supérieure à la hauteur de l'ouverture, mais étant élastiquement compressible.

9. Dispositif de raccordement selon l'une quelconque des revendications précédentes, dans lequel la sangle (5, 23) est connectée à un élément gonflable sous la forme d'un rideau latéral gonflable.

10. Dispositif de raccordement selon la revendication 8, dans lequel l'ouverture est formée dans le montant A de la carrosserie du véhicule.

11. Procédé de raccordement d'une sangle sensiblement plane (5, 23) à une ouverture (2, 13, 22) formée dans une partie d'un véhicule à moteur, le procédé comprenant les étapes consistant à replier une partie terminale de la sangle au moins une fois (6, 7) pour créer une région terminale comprenant au moins deux couches adjacentes de sangle, et à introduire la région terminale à travers l'ouverture (2, 13, 22), le procédé étant **caractérisé par** les étapes consistant à : fixer de façon permanente les couches adjacentes de sangle ensemble uniquement sur une partie de la région dans laquelle elles sont adjacentes pour définir, dans une autre partie de la région, une languette libre (11, 26) adjacente à la sangle principale (5, 22), et à positionner la sangle (5, 23) de telle façon que lorsque une force est appliquée à la sangle (5, 23) qui tend à faire sortir la sangle hors de l'ouverture, la languette libre (11, 26) de la sangle va engager la partie du véhicule adjacente à la périphérie de l'ouverture (2, 13, 22) pour empêcher à la région terminale de passer à travers l'ouverture.

12. Procédé selon la revendication 11, dans lequel l'extrémité de la sangle est repliée deux fois pour créer la région terminale, la région terminale ayant ainsi trois couches de sangle.

13. Procédé selon l'une ou l'autre des revendications 11 et 12, dans lequel les couches adjacentes de sangle sont fixées de manière permanente ensemble par couture (10).

14. Procédé selon l'une quelconque des revendications 11 à 13, dans lequel l'ouverture (2, 13) comporte une première région (3, 14) dimensionnée de manière à permettre à la région terminale de la sangle (5) d'être introduite à travers celle-ci, et une seconde région (4, 16) pour recevoir et retenir la sangle plane, le procédé comprenant les étapes consistant à introduire la région terminale de la sangle (5) à travers la première région (3, 14) de l'ouverture (2, 13), et à manipuler la sangle plane de telle façon qu'elle soit située dans la seconde région (4, 16) de l'ouverture.

15. Procédé selon l'une quelconque des revendications 11 à 14, dans lequel l'ouverture (22) est une ouverture rectangulaire ayant une largeur légèrement supérieure à la largeur de la sangle et ayant une hauteur légèrement supérieure à l'épaisseur de la région terminale dans laquelle lesdites deux couches adjacentes de sangle (23) sont fixées de façon permanente ensemble, le procédé comprenant les étapes consistant à introduire la région terminale à travers l'ouverture, à comprimer une partie de la région terminale dans laquelle les couches adjacentes de sangle ne sont pas fixées de façon permanente ensemble, de telle sorte qu'elle va passer à travers l'ouverture (22), et à permettre à la région comprimer de se dilater à nouveau.
